# EUROPÄISCHE PATENTSCHRIFT

(11) **EP 2 268 390 B1**
(45) Veröffentlichungstag und Bekanntmachung des Hinweises auf die Patenterteilung: **23.11.2011**
(21) Anmeldenummer: 09723185.6
(22) Anmeldetag: 13.03.2009
(51) Int. Cl.: B01J 13/14, B01J 13/18

(54) **VERFAHREN ZUM VERKAPSELN VON LATENTWAERMESPEICHERMATERIALIEN SOWIE DAMIT ERHALTENE PRODUKTE**
METHOD FOR ENCAPSULATING LATENT HEAT STORAGE MATERIAL AND PRODUCTS OBTAINED THEREBY
PROCÉDÉ D' ENCAPSULATION DE MATÉRIAUX DE STOCKAGE PAR CHALEUR LATENTE ET PRODUITS AINSI OBTENUS

(30) Priorität: 19.03.2008 DE 102008015302
(43) Veröffentlichungstag der Anmeldung: 05.01.2011
(73) Patentinhaber: Fraunhofer-Gesellschaft zur Förderung der angewandten Forschung e.V., 80686 München (DE); Universität Würzburg, 97070 Würzburg (DE)
(72) Erfinder: HOUBERTZ-KRAUSS, Ruth, 97074 Würzburg (DE); SEXTL, Gerhard, 97204 Hoechberg (DE); HELBIG, Uta, 90403 Nürnberg (DE); PLATTE, Daniela, 97070 Würzburg (DE); PUNNOOSE, Anu, 97072 Würzburg (DE)
(86) Internationale Anmeldenummer: PCT/EP2009/053016
(87) Internationale Veröffentlichungsnummer: WO 2009/115468

(56) Entgegenhaltungen:
- EP-A1- 1 764 136
- EP-A2- 1 886 714
- DE-A1- 19 954 769
- DE-A1- 19 954 771
- DE-A1- 19 954 772
- DE-U1-202005 017 261

## Beschreibung

Die vorliegende Erfindung betrifft verkapselte Materialien, die zur reversiblen Speicherung von Energie in der Form von latenter Wärme eingesetzt werden sollen. Außerdem betrifft sie ein Verfahren zum Verkapseln solcher Materialien.

Latentwärmespeicher werden für die thermische Speicherung von Energie eingesetzt. Sie werden daher als eine Art "thermischer Batterie" bezeichnet und benutzt. Als Latentwärmespeichermaterialien, die auch als phase change material (PCM) bezeichnet werden, eignen sich verschiedene Stoffklassen. Voraussetzung ist, dass die Materialien im für die Anwendung relevanten Temperaturbereich einen Phasen-übergangsprozess durchlaufen. Diese Phasenumwandlungen sollten mit einem hohen Betrag an Umwandlungswärme verbunden und reversibel sein. Geeignet sind beispielsweise organische Materialien wie Paraffine, insbesondere C₁₄-C₃₀-Alkane, Polyethylenglycole, Polyole, vernetzte Polyethylene (siehe Lane, G.A., Solar Heat Storage: Latent Heat Materials, Vol.2: Technology Bocaraton FL, CRC Press Inc., 2. Aufl. 2000) oder Fettsäuren. Die Vorteile der organischen PCMs sind der breite Bereich der Umwandlungstemperaturen, die geringe Tendenz zur Unterkühlung vor der Kristallisation und kongruentes Schmelzen. Gegenüber anorganischen PCM-Materialien weisen sie jedoch eine schlechtere Wärmeleitfähigkeit und eine geringe Speicherdichte auf. Zudem stellen organische PCMs eine höhere Brandlast dar. Der Vorteil anorganischer PCMs, zu denen insbesondere Salzhydrate zu rechnen sind, liegt vor allem in der höheren Speicherdichte. Obwohl die Umwandlungswärmen dieser Materialien mit denen organischer PCMs etwa vergleichbar sind, bezogen auf die jeweiligen Molmengen, können etwa doppelt so große Speicherdichten erreicht werden, da insbesondere Salzhydrate höhere Dichten aufweisen. Anorganische Latentwärmespeicher sind jedoch häufig inkongruent schmelzende Substanzen und tendieren daher mit zunehmender Zyklenzahl zur Entmischung.

Die meisten Latentwärmespeicher müssen, da sie in geladenem Zustand (Schmelzenthalpie aufgenommen) in flüssiger Form vorliegen, in geeigneten Behältern betrieben werden. Die Behälter müssen verschiedenen Anforderungen genügen: Sie müssen mechanisch stabil und chemisch beständig gegenüber dem PCM Material sein und eine genügend hohe Wärmeleitfähigkeit besitzen. Sie sollten im Betriebsbereich, vorzugsweise aber darüber hinaus, temperaturbeständig sein. Eine gute Barrierewirkung gegen Wasser und andere leicht flüchtige Komponenten ist anzustreben, z.B. um zu verhindern, dass ein gegebenenfalls vorhandenes Verdünnungsmedium oder gar das Kristallwasser von Salzhydraten abdampfen kann.

Die Behälter können, angepasst an die Anwendung, in verschiedenen Geometrien ausgeführt werden. Für viele Anwendungen ist es sinnvoll, das Latentwärmespeichermaterial zu verkapseln. Da jede Vergrößerung der Oberfläche die Wärmeleitfähigkeit erhöht und eine räumliche Phasenseparation in kleinen Volumina unwahrscheinlicher wird, andererseits das Verkapselungsmaterial die Speicherkapazität pro Gewichtseinheit verringert, ist eine Verkapselung im mm- oder µm-Maßstab (in Kapseln mit Durchmessern von 1 bis 10 mm bzw. 1 bis 1000 µm) als optimal anzustreben. Mikrokapseln dienen als aktive Komponente in PCM-Slurrys und können in Materialien wie Baustoffen und Textilien integriert werden. Eine Mikroverkapselung ist darüber hinaus besonders für anorganische PCM-Materialien günstig, da eine mögliche Entmischung der Materialien während der thermischen Zyklierung aufgrund der Kleinräumigkeit innerhalb der Kapsel-Kompartimente verhindert werden kann.

Verkapselte organische Speichermaterialien sind bekannt und werden in Einzelfällen bereits kommerziell genutzt.

Als anorganisches PCM-Material sind, wie oben erwähnt, insbesondere Salzhydrate geeignet. Darunter versteht man mit Wassermolekülen kristallisierende Salze, die bei relativ niedrigen Temperaturen im eigenen Kristallwasser schmelzen. Ihre Schmelzen liegen strukturell zwischen den einfachen Salzschmelzen und den Salzlösungen. Die kommerziell oder anderweitig zugänglichen Salzhydrate besitzen Schmelzpunkte vorwiegend im Bereich von etwa 7 bis 117°C. Sie zeigen unterschiedliche Phasengleichgewichtsverhältnisse. Beispielsweise besitzt Mg(NO₃)₂ x 6H₂O einen vollständig kongruenten Schmelzpunkt, während beispielsweise Na₂SO₄ x 10 H₂O nicht nur inkongruent schmilzt, sondern sogar ein inverses Verhältnis Temperatur/Löslichkeit aufweist. Alle Materialien besitzen einen merklichen Wasserdampfdruck, der mit steigender Temperatur steigt. Weitere Beispiele für kongruent schmelzende Salzhydrate sind CaCl₂ x 6 H₂O (rein oder modifiziert) oder KF x 4H₂O. Andere Salzhydrate schmelzen quasi-kongruent, kongruent isomorph oder inkongruent, d.h. beim Schmelzvorgang findet eine Separation in eine wasserärmeres, höher schmelzendes Salzhydrat und eine wasserreichere flüssige Phase statt. Die Separation ist aufgrund stattfindender räumlicher Trennung der Phasen häufig nicht reversibel, was durch das Vorsehen von kleinräumigen Kompartimenten wie Mikrokapseln oder dgl. aber weitgehend verhindert werden kann. Außerdem kann die Inkongruenz des Schmelzpunkts in vielen Salzhydraten durch die Zugabe geringer Wassermengen beseitigt werden. Weitere Beispiele für Salzhydrate finden sich in Lane, G.A., a.a.O. Ein typisches basisches, nicht hygroskopisches Salzhydrat mit einem inkongruenten Schmelzpunkt von 32 bis 36°C und einer Schmelzwärme von etwa 247 kJ/kg ist Natriumcarbonat-Dekahydrat. Da Natriumcarbonat (Soda) ein kostengünstiges Massenprodukt ist, bietet es sich neben anderen Salzhydraten als für die vorliegende Erfindung geeignetes PCM an. Durch Zugabe geringer Mengen Wasser (z.B. 10 Gew.-%) erzielt man einen kongruenten Schmelzpunkt; aus der verdünnten Schmelze kristallisiert wiederum das Dekahydrat aus. Ein weiteres Salzhydrat, das besonders erwähnenswert und für die Erfindung günstig ist, ist eine Mischung aus 17 Gew.-% Na₂CO₃, 15 Gew.-% Na₂HPO₄ und 68 Gew.-% H₂O. Diese Mischung enthält bereits die vorgenannte geringe Menge Wasser, so dass ein kongruenter Schmelzpunkt bzw. eine klare Schmelze erzielt werden können. Die als PCM wirkenden Hydrate sind dabei Natriumcarbonat-Dekahydrat und Natriumhydrogenphosphat-Dodekahydrat. Die Kombination dieser beiden Salze ist in H. Zhan et al., J. Therm. Anal. (1995) 45, 109-115 beschrieben. Die Kombination zeichnet sich durch einen sehr niedrigen Schmelzpunkt (ca. 23°C) aus, so dass sie sich in verkapselter Form insbesondere auch zur Anwendung in Gebäuden eignet.

Die vorgenannten Salzhydrate sind zu unterscheiden von wasserfreien Salzen, die unter Wärmeabgabe Wassermoleküle in ihr Kristallgitter aufnehmen können. Zwar ist diese Reaktion prinzipiell ebenfalls reversibel; die unter Wärmeaufnahme ablaufende Rückreaktion kann jedoch nur dadurch erfolgen, dass die Wassermoleküle räumlich vom jeweiligen Salz getrennt werden. Als verkapselte PCMs nutzen lassen sich aber nur solche Materialien, die eine reversible Speicherung von Wärme ohne intermediäre Trennung ihrer Bestandteile ermöglichen. Dementsprechend eignen sich die mikroverkapselten, Wärme abgebenden Materialien der WO 2007/075208 A1, die wasserfreies Calciumchlorid enthalten, nur für den einmaligen Gebrauch, beispielsweise für kosmetische Produkte. Diese Mikrokapseln sind in der Regel mit einem Alginat und prinzipiell so verkapselt, dass hinzutretendes Wasser oder hinzutretende Feuchtigkeit in Kontakt mit dem Salz gelangen, wodurch eine Erwärmung ausgelöst wird.

Dementsprechend wird in der vorliegenden Erfindung der Ausdruck "Wärmespeichermaterial" nur für solche Materialien verwendet, die Wärme reversibel speichern können, ohne dass sie in einem der beiden Zustände, die sie einnehmen können, in Form getrennter Bestandteile vorliegen müssen.

Zur Verkapselung von verschiedenen Kernmaterialien ist eine Reihe von Methoden bekannt. Siddhan, P. et al. beschreiben in J. Appl. Polymer Sci. 106, 2007, 786-792 die Mikroverkapselung von n-Octadecan in Polyharnstoff mit Hilfe von Grenzflächenpolymerisation. Bei dieser Methode scheidet sich das in flüssiger Phase entstehende Polymer auf der Oberfläche von Tropfen ab, die das Kernmaterial bilden. Liu, W.-J. et al. zeigen in Polym. Int. 55, 2006, 520-524 die Verkapselung von hydrophobem Polystyrol mit hydrophiler Polymethacrylsäure mit Hilfe einer zweistufigen Emulsionspolymerisation in Abwesenheit von Emulgator. Wang, L.-Y. et al. stellen in J. of Microencapsulation 23(1), 2006, 3-14 ein Verfahren zum Verkapsein von n-Pentadecan mit einer anorganischen Siliciumdioxid-Hülle mit Hilfe von Sol-Gel-Technik (aus Tetraethoxysilan) in einer O/W-Emulsion vor DE 199 54 771 A1 offenbart ein Salzhydrat , das von einer Verkapselungsschicht umgeben vorliegt, wobei die Verkapselungsschicht aus einem Polymer besteht, das durch die Polymerisation von SiR₁R₂R₃X Monomeren gebildet ist, wobei X eine Hydroxylgruppe und R₁, R₂, R₃ gleiche oder verschiedene C₁ bis C₃₀ Alkylgruppen sind. DE 199 54 771 A1 offenbart auch ein Verfahren zum Herstellen eines Salzhydrats, das von einer Verkapselungsschicht umgeben vorliegt, wobie die Verkapselungsschicht aus einem Polymer besteht, das durch die Polymerisation von SiR₁R₂R₃X Monomeren gebildet ist, wobei X eine Hydroxylgruppe und R₁, R₂, R₃ gleiche oder verschiedene C₁ bis C₃₀ Alkylgruppen sind, dadurch gekennzeichnet, dass ein Salzhydrat als Pulver in eine Lösung von SiR₁R₂R₃X Monomeren eingebracht wird, derart, dass sich das Verkapselungsmaterial beim Kontakt mit dem Salzhydrat Pulver an dessen Aussenflächen verfestigt. Mikrokapseln mit einer Wandstruktur aus Silikon und einem Kern aus lipophilen, organischen, flüssigen Substanzen, die aus DE 199 54 772 A1 bekannt sind, besitzen Latentwärmespeicherfähigkeit; auch sie werden aus einer O/W-Emulsion erzeugt. O/W-Emulsionsverfahren sind allerdings zum Verkapseln von anorganischen Materialien nicht geeignet, da diese viel zu polar sind.

Aufgabe der vorliegenden Erfindung ist es daher, ein Verfahren aufzufinden, mit dem sich anorganische PCMs mit einer Beschichtung versehen und damit verkapseln lassen. Die Aufgabe betrifft weiterhin die Bereitstellung entsprechend verkapselter PCMs.

Diese Aufgabe wird gelöst durch den Vorschlag, anorganische, insbesondere polare PCMs wie Salzhydrate in einem anorganisch-organischen Polymermaterial zu verkapseln, das aus einem Metall- (und/oder Halbmetall-)Sauerstoff-Netzwerk mit eingelagerten, zumindest teilweise am (Halb-)Metall gebundenen organischen Gruppen aufgebaut ist. Insbesondere ist das genannte Material ein gegebenenfalls (z.B. durch andere Metallatome) modifiziertes Organopolysiloxan. Die Verkapselung liegt in Form einer schichtförmigen Kapsel vor, die sich um den Kern aus PCM herum schließt.

Anorganisch-organische Materialien sind in großer Zahl bekannt. Eine große Gruppe stellen die ORMOCER^{®}e dar, die am Fraunhofer-Institut für Silicatforschung entwickelt wurden. Diese können als Organopolysiloxane oder hydrolytische Kondensate von (Halb-)Metallverbindungen, insbesondere Siliciumverbindungen, angesehen werden, die durch am (Halb-)Metallatom gebundene organische Reste (organisch polymerisierbar/polymerisiert oder nicht polymerisierbar) modifiziert sind. Neben Siliciumverbindungen können andere hydrolysierbare/hydrolysierte Metallverbindungen, z.B. des Aluminiums, Bors, Germaniums etc. vorhanden sein.

Die Herstellung von organisch modifizierten Polysiloxanen oder Kieselsäurekondensaten (häufig auch als "Silanharze" bezeichnet) und deren Eigenschaften sind in einer Fülle von Publikationen beschrieben worden. Stellvertretend sei hier z.B. auf Hybrid Organic-Inorganic Materials, MRS Bulletin 26(5), 364ff (2001) verwiesen. Ganz allgemein werden solche Substanzen in der Regel mit Hilfe des sogenannten Sol-Gel-Verfahrens hergestellt, indem hydrolyseempfindliche, monomere oder präkondensierte Silane, ggf. in Gegenwart weiterer cokondensierbarer Substanzen wie Alkoxiden des Bor, Germanium oder Titan, sowie ggf. von zusätzlichen Verbindungen, die als Modifikatoren oder Netzwerkwandier dienen können, oder von sonstigen Additiven wie Farb- und Füllstoffen, einer Hydrolyse und Kondensation unterworfen werden.

Das Verkapselungsmaterial der vorliegenden Erfindung wird vorzugsweise aufgebaut aus mindestens einem Silan der Formel

RₐR'_{b}SiX_{4-a-b} (I)

oder unter Verwendung eines solchen Silans, worin die Substituenten R, R' und X gleich oder verschieden sein können und worin R einen über Kohlenstoff am Silicium gebundenen, organisch vernetzbaren Rest darstellt, R' einen über Kohlenstoff am Silicium gebundenen, organisch nicht vernetzbaren Rest darstellt, X eine unter Hydrolysebedingungen vom Silicium abspaltbare Gruppe oder OH ist, a 0, 1 oder 2 ist, b 0, 1 oder 2 ist und a+b 1 oder 2 sein müssen und vorzugsweise 1 sind.

Die Vernetzung des Restes R kann über eine bzw. mehrere Gruppen durch eine radikalische oder kationische Polymerisation erfolgen. Unter "Polymerisation" soll dabei eine Polyreaktion verstanden werden, bei der reaktionsfähige Doppelbindungen oder Ringe unter dem Einfluss von Initiatoren, von Wärme, Licht oder ionisierender Strahlung in Polymere übergehen (engl.: addition polymerization oder chain-growth polymerization). Beispielsweise kann eine kationische Polymerisation mit Hilfe eines kationischen UV-Starters erfolgen, beispielsweise mit einem Epoxysystem (siehe z.B. C.G. Roffey, Photogeneration of Reactive Species for UV Curing, John Wiley & Sons Ltd, (1997)). Beispiele für R sind daher Reste mit einer oder mehreren nichtaromatischen C=C-Doppelbindungen, vorzugsweise einer Michaeladdition zugänglichen Doppelbindungen, wie Styryle oder (Meth)Acrylate. Alternativ kann die Vernetzung durch andere Polyreaktionen wie ringöffnende Polymerisation, Esterbildung etc. erfolgen. In spezifischen Ausführungsformen kann diese Polyreaktion direkt, z.B. zwischen einem epoxidhaltigen Rest R an einem ersten Silan der Formel (I) und einem aminhaltigen Rest R an einem zweiten Silan der Formel (I), erfolgen. In anderen spezifischen Ausführungsformen kann die Vernetzung über ein Vernetzungsmittel erfolgen, beispielsweise ein Diamin zur Vernetzung von einen Glycidylrest am Rest R enthaltenden Silanen der Formel (I). Der Rest R enthält in der Regel mindestens zwei und vorzugsweise bis zu ca. 50 Kohlenstoffatome.

Der Rest R' ist zu einer solchen Reaktion nicht fähig. Vorzugsweise handelt es sich dabei um eine ggf. substituierte Alkyl-, Aryl-, Alkylaryl- oder Arylalkylgruppe, deren Substituenten eine Vernetzung nicht zulassen, wobei die Kohlenstoffkette dieser Reste ggf. durch O, S, NH, CONH, COO, NHCOO oder dgl. unterbrochen sein kann. Bevorzugt sind Reste R' mit 1 bis 30 oder auch bis 50, stärker bevorzugt 6 bis 25 Kohlenstoffatomen. Unsubstituierte oder fluorierte Alkylgruppen mit einer derart großen Anzahl von Kohlenstoffatomen sind besonders bevorzugt, da sie zu einer niedrigen Wasserdampfpermeation beitragen können.

Die Gruppe X in Formel (I) ist eine unter Hydrolysebedingungen vom Silicium abspaltbare Gruppe. Welche Gruppen hierfür geeignet sind, ist dem Fachmann aus dem Stand der Technik bekannt. In der Regel ist die Gruppe X Wasserstoff, Halogen, Hydroxy, Alkoxy, Acyloxy oder NR"₂ mit R" gleich Wasserstoff oder Niederalkyl (vorzugsweise mit 1 bis 6 Kohlenstoffatomen). Alkoxygruppen sind als abspaltbare Gruppen bevorzugt, insbesondere Niederalkoxygruppen wie C₁-C₆-Alkoxy.

Da sowohl der Index a als auch der Index b 0 sein kann, kann das Silan der Formel I entweder einen oder zwei Reste R oder einen oder zwei Reste R' aufweisen. Alternativ können ein Rest R und ein Rest R' vorhanden sein. Die Alternative mit zwei Resten R ist neben anderen Varianten bevorzugt, weil eine hohe organische Vernetzung eine hohe Dichtigkeit der Verkapselung und damit eine niedrige Wasserdampfpermeationsrate bewirkt.

Das bevorzugte Verkapselungsmaterial der vorliegenden Erfindung bildet sich in der Regel durch Hydrolyse und Kondensation von Silanen der Formel (I) (ggf. in Gegenwart weiterer Komponenten wie Metallalkoxiden), wobei sich nicht notwendigerweise, aber in den bevorzugten Fällen eine Vernetzung über die Reste R anschließt. Der Vorzug liegt darin, dass organisch unvemetzte Siliciumpolykondensate sehr wenig flexibel sind, so dass sie eher zur Rissbildung neigen und stressanfällig sind. Alternativ (aber in eher seltenen Fällen) kann das Material ausschließlich durch Vernetzung über die Reste R der zugrunde liegenden Silane polymerisiert sein.

Das Verkapselungsmaterial kann unter Verwendung mindestens eines weiteren Silans der Formel (II)

SiX₄ (II)

erzeugt worden sein, worin X gleich oder verschieden ist und die gleiche Bedeutung wie in Formel (I) besitzt. Eine hierfür gut einsetzbare Verbindung ist Tetraethoxysilan. Durch Zugabe solcher Silane zu der zu hydrolysierenden und kondensierenden Mischung, aus der schließlich das Verkapselungsmaterial entsteht, wird der SiO-Anteil des Harzes, also der anorganische Anteil, erhöht. Dadurch lässt sich die Permeabilität für Gase und damit auch für Wasserdampf verringern; Nachteil ist allerdings, dass Materialien mit hohem anorganischem Anteil spröder sind als solche mit geringem anorganischem Anteil. Daher neigen sie eher zu Stress und Rissbildung.

Stattdessen oder gegebenenfalls zusätzlich kann das erfindungsgemäße Verkapselungsmaterial unter Verwendung mindestens eines Silans mit der Formel (III)

RₐR'₃₋ₐSiX (III)

hergestellt worden sein, worin R, R' und X die voranstehend für Formel (I) angegebene Bedeutung haben. Dadurch wird der organische Anteil des Materials erhöht, was die Elastizität des Materials verbessert.

Das erfindungsgemäße Verkapselungsmaterial kann weitere Substanzen enthalten, z.B. vorzugsweise niedere Alkoxide, insbesondere C₁-C₆-Alkoxide, von Metallen der III. Hauptgruppe, von Germanium und von Metallen der II., III., IV., V., VI., VII. und VIII. Nebengruppe.

Beispiele für erfindungsgemäß gut einsetzbare Materialien sind solche, wie sie in WO 03/031499 oder WO 03/037606 offenbart sind.

Wie voranstehend erläutert, besitzen Salzhydrate einen merklichen Dampfdruck. Es ist deshalb bevorzugt, Verkapselungsmaterialien mit guten Barriereeigenschaften für den Durchtritt von insbesondere Wasserdampf einzusetzen. Solche Materialien sind bekannt. So beschreibt EP 0644908 B1 siliconbasierte Lacke, hergestellt mittels Sol-Gel-Prozessierung, und deren Verwendung als Substratbeschichtungen. Die Materialien eignen sich dabei besonders im Einsatz unter sehr rauen Umgebungsbedingungen, also insbesondere als Passivierungs- und Verkapselungsmaterialien gegen Feuchte. Im Bereich der Passivierung von (mikro-)elektronischen Bauelementen wie z.B. SMT (surface-mount technology)-Bauelementen oder als strukturierte Schicht in Mehrfachschichtaufbauten wurden Hybridpolymere ausschließlich als abschließende Verkapselungsschicht (strukturierbare Barriereschichten gegen Wasserdampf/Feuchte) eingesetzt, siehe Houbertz R. et al., Mat. Res. Soc. Symp. 665, 2001, 321-326. Die Wasserdampfpermeationsraten der Hybridpolymere lassen sich über den Gehalt an anorganischem Anteil sowie den organischen Funktionalitäten steuern. Mit passivierenden, strukturierbaren Hybridpolymeren wurden schon WTR-Werte von ca. 1 bis 3 g/m²d (bezogen auf 100 µm Schichtdicke) publiziert, siehe Houbertz et al., Mater. Res. Soc. Symp. 769, 2003, 239-244. Dementsprechend ist es für die Verkapselung von Salzhydraten günstig, Verkapselungsmaterialien auf Basis der in diesen Druckschriften genannten Silane bzw. Lacke einzusetzen.

Die Verkapselung anorganischer Materialien kann in der Regel nicht über ein Emulsionsverfahren erfolgen. Daher stellt die Erfindung ein davon völlig verschiedenes, neues Verfahren bereit, um die PCMs zu verkapseln.

Dieses Verfahren ist dadurch gekennzeichnet, dass flüssiges bzw. verflüssigtes PCM-Material in ein flüssiges oder viskoses Vorläufermaterial des Verkapselungsmaterials eingebracht, vorzugsweise eingetropft wird, derart, dass sich das Verkapselungsmaterial beim Kontakt mit dem PCM-Material an dessen Außenflächen verfestigt, während das PCM-Material sich in der Regel gleichzeitig (z.B. durch Abkühlung) von der flüssigen in die kristalline Phase umwandelt.

Wenn das Verkapselungsmaterial aus oder unter Verwendung eines Silans mit der Formel (I) gebildet werden soll, wird als Vorläufermaterial vorzugsweise ein Lack eingesetzt, der durch zumindest teilweise erfolgte Hydrolyse und Kondensation eines Ausgangsmaterials erzeugt wurde, das das Silan mit der Formel (I) enthielt. In seltenen Fällen kann das Vorläufermaterial stattdessen das Silan der Formel (I) in noch nicht hydrolysierter/kondensierter Form aufweisen. Die Verfestigung erfolgt dann in den bevorzugten Fällen durch eine Vernetzung der Reste R des (Teil-)Kondensats, erhalten aus oder unter Verwendung von Silanen mit der Formel (I), und/oder durch eine anorganische Vernetzung (Kondensation) des noch nicht oder noch nicht vollständig hydrolysierten und kondensierten Vorläufermaterials.

Das Vorläufermaterial wird in der Regel mit Hilfe des sogenannten Sol-Gel-Prozesses aus den monomeren Metallverbindungen, insbesondere den jeweiligen Silanen, erzeugt. Es kann ohne Verdünnungsmittel vorliegen oder - vorzugsweise relativ geringe Mengen an - Verdünnungsmittel enthalten, z.B. Wasser und/oder Alkohol (gegebenenfalls z.B. verblieben aus der hydrolytischen Kondensationsreaktion), oder ein unpolares Lösungsmittel (z.B. wenn das Material relativ hydrophob ist) enthalten, bzw. darin gelöst sein. Mit Hilfe von Verdünnungsmittel lässt sich meist auch eine geeignete Viskosität einstellen.

Diesbezüglich ist anzumerken, dass die Vernetzung in den meisten Fällen nicht schlagartig verläuft, sondern einige Zeit in Anspruch nimmt. Über diesen Zeitraum muss gewährleistet werden, dass die Oberfläche des PCM-Materials vollständig Kontakt zum Beschichtungsbad hat. Würde dies nicht sichergestellt, würde eine nur partielle Beschichtung resultieren. Deshalb sollte die Viskosität vorzugsweise so gewählt sein, dass auf die Oberfläche des Materials auftreffende Tropfen darin nur langsam versinken, so dass sie nicht sofort auf dem Grund des Gefäßes auftreffen, um eine Vernetzung rund um die Tropfen zu gewährleisten. Hierzu kann die Geometrie dieses Gefäßes beitragen: Lange, hohe Gefäße sind besonders geeignet. Im Übrigen (zusätzlich oder alternativ) kann die Viskosität bei Bedarf auch erhöht werden, indem dem Vorläufermaterial bzw. dessen Lösung in einem Verdünnungsmittel ein Verdicker zugesetzt wird. Stattdessen oder zusätzlich kann die Dichte des Beschichtungsbades derjenigen des zu verkapselnden Latentspeichermaterials ähneln oder die gleiche sein, die das Latentspeichermaterial besitzt. Auf diese Weise kann man erreichen, dass die Tropfen im Beschichtungsbad schweben oder nur äußerst langsam zu Boden sinken.

Als Verdickungsmittel bieten sich Stoffe an, die das Beschichtungsbad thixotropieren oder zumindest anti-absetzend wirken. Hierfür eigenen sich z.B. Partikel mit Durchmessern im Nanometerbereich (z.B. Teilchen im Bereich ab ca. 6 nm, aber auch insbesondere aus kleineren Teilchen aggregierte Partikel mit Durchmessern im 100 nm-Bereich), die in Wechselwirkung mit Komponenten des Bades treten derart, dass sie z.B. ein Netzwerk aus Van-der-Vaals-Kräften wie Wasserstoffbrücken bilden. Diese können je nach Bedarf hydrophil sein, wie z.B. das Pulver aus [Si-O]ₓ-Partikeln mit zahlreichen Silanolgruppen auf der Oberfläche, das unter dem Markennamen Aerosil® 380 von Degussa bzw. Evonik vertrieben wird. Dieses Material kann insbesondere in unpolaren Lösungen ein Netzwerk aus Wasserstoffbrücken aufbauen, wodurch eine Verdickung bis hin zur Gelierung eintreten kann, die durch Zugabe eines unpolaren Lösungsmittels wie Toluol ohne weiteres wieder rückgängig gemacht werden kann. Selbstverständlich sind auch weniger hydrophile Zusätze geeignet, die der Fachmann ohne weiteres auffinden kann, beispielsweise sog. Antiabsetzmittel, die rein organisch sein können und z.B. aus unverzweigten Polyethylen-Ketten bestehen können, oder ähnliche Mittel. Diese sind für den Fall, dass Salzschmelzen als Latentwärmespeicher eingesetzt werden sollen, sogar günstiger, weil sie beim in der Regel unvermeidlichen Einbau in das Verkapselungsmaterial dessen Hydrophobie nicht verringern, was in Hinblick auf die Wasserdampfbarrierewirkung der Verkapselung in vielen Fällen wichtig sein kann.

Die Vernetzung kann auf verschiedenen Wegen bewirkt werden.

In einer ersten Variante wird die organische und/oder anorganische Vernetzung des Vorläufermaterials durch Energieeintrag bewirkt, ohne dass ein Katalysator erforderlich wäre. Die Energie hierfür wird vorzugsweise in Form von Wärme eingebracht. Hierfür lässt sich die Umwandlungsenergie des PCMs (Erstarrungswärme bei Saizhydraten) nutzen: Das verflüssigte/flüssige PCM-Material wird z.B. in Form von Tropfen in ein Verkapselungs-Vorläufermaterial mit einer geeigneten, niedrigeren Temperatur eingebracht, derart, dass es dabei erstarrt. Die freiwerdende Energie auf der Oberfläche der Tropfen bewirkt dann die anorganische und/oder organische Vernetzung von Vorläufermaterial auf dieser Oberfläche: es bildet sich eine Kapsel um den Tropfen. Ein Beispiel für eine solche Variante ist die Bereitstellung von Verkapselungs-Vorläufermaterial unter Verwendung zweier verschiedener Silane mit der Formel (I), von denen eines einen Rest R enthält, der mit dem Rest R eines zweiten Silans der Formel (I) reagieren kann (z.B. aminhaltiger Rest R mit epoxihaltigem zweitem Rest R; Vernetzung unter Ausbildung von NH-CO-Gruppen). Dabei ist natürlich darauf zu achten, dass das Vorläufermaterial ausreichend stark gekühlt wird, um eine Vernetzung in Abwesenheit von PCM weitestgehend zu unterdrücken.

In einer zweiten Variante wird die Vernetzung ebenfalls ohne Katalysator bewirkt; sie erfolgt jedoch mit Hilfe eines Quervernetzers, der entweder im PCM oder im Verkapselungs-Vorläufermaterial vorhanden ist. Ein solcher Quervernetzer kann z.B. ein Oligoamin (z.B. Diamin) oder ein Oligoepoxid (z.B. ein Diepoxid) sein, der Reste R des Silans der Formel (I) mit einer Epoxid- bzw. Amingruppe unter Ausbildung von Amidogruppen vernetzt. Wird der Quervernetzer dem PCM zugemischt, wird die Gefahr einer vorzeitigen Vernetzung des Vorläufermaterials unterbunden. Allerdings muss er in diesem Fall mit dem PCM kompatibel sein und darf dessen Umwandlung nicht unterdrücken. Wird er dem Vorläufermaterial zugemischt, muss wie in der ersten Variante darauf geachtet werden, dass die Temperatur ausreichend niedrig ist. Der Quervernetzer sollte vorzugsweise so ausgewählt werden, dass er bereits bei relativ geringen Temperaturen reagiert. Ein Beispiel für einen solchen Quervernetzer ist Triethylentetramin.

In einer dritten Variante wird die Vernetzung durch die Einwirkung eines Katalysators oder Initiators bewirkt. Dieser kann entweder aus einer Komponente bestehen, wobei er wie der Quervernetzer der zweiten Variante eingesetzt wird, die Bereitstellung von zusätzlicher Vernetzungsenergie allerdings überflüssig macht. Statt dessen kann der Katalysator/Initiator aus zwei Komponenten bestehen, die zusammenwirken müssen, damit die Vernetzung erfolgt. Eine dieser Komponenten wird dem PCM, die andere dem Vorläufermaterial zugesetzt. Wird das PCM in das Vorläufermaterial eingebracht, wirken die beiden Komponenten an den Außenflächen der eingebrachten Tropfen zusammen, und es bildet sich eine Verkapselung aus vernetztem Vorläufermaterial.

Solche Initiatoren können in einer ersten, allerdings weniger bevorzugten Ausführungsform entweder eine hydrolytische Kondensation des Vorläufermaterials in Gang setzen, sofern das Vorläufermaterial aus Monomeren (Silane und ggf. Metallalkoxide) besteht, oder diese hydrolytische Kondensation vervollständigen, falls das Vorläufermaterial ein Präkondensat der Monomeren enthält. Ein Beispiel hierfür ist die basisch katalysierte Polykondensation von Arylsilandiolen mit methacrylatgruppenhaltigen Trialkoxysilanen, wie sie in DE 199 32 629 A1 beschrieben ist. Neben Triethylamin oder Ammoniumfluorid eignen sich Erdalkalihydroxide wie Ba(OH)₂ als Initiatoren für diese Polykondensation. Diese Verbindungen können besonders gut basischen Salzhydraten als PMC zugesetzt werden; in einem Spezialfall können Salzhydrat und Erdalkalihydroxid sogar identisch sein. Dieser Spezialfall ist der obigen, ersten Variante sehr ähnlich, weil die Verkapselungsenergie ohne weitere Maßnahmen, ausschließlich durch das Einbringen des PCM, in das Vorläufermaterial eingetragen werden kann.

In einer zweiten, stärker bevorzugten Ausführungsform der dritten Variante wird mit Hilfe des ein- oder mehrkomponentigen Initiatorsystems die Vernetzung des Vorläufermaterials über Gruppen R bewirkt. Beispiele für Initiatorsysteme, die eine solche Vernetzung bewirken, sind Redox-Startersysteme wie Ammoniumperoxodisulfat (APS) mit einem Reduktionsmittel wie Tetramethylenethylendiamin (TMEDA) oder Ferrocen. Da APS im alkalischen Milieu relativ stabil ist, eignet es sich zur Beigabe zum PCM. APS ist in Salzhydrat-Schmelzen in der Regel vollständig löslich; es behindert die Kristallisation des Salzhydrates aus der Schmelze nicht. Die reduzierende Komponente wird in derartigen Fällen dem Vorläufermaterial zugesetzt. Lacke aus hydrolytisch kondensierten Silanen der Formel (I) sind bei Raumtemperatur oder darunter in der Regel über Monate stabil. Je nach Wahl des Reduktionsmittels lassen sich Mischungen erhalten, die ebenfalls lange stabil sind und sich daher im Voraus in großen Mengen vorproduzieren lassen.

Die verschiedenen Varianten können auch in geeigneter Weise kombiniert werden. Beispielsweise kann die freiwerdende Wärme beim Eintropfen des PCM zusätzlich zu einem Katalysator für die Vernetzung genutzt werden. Dies ist nicht nur, aber insbesondere dann möglich, wenn die Vernetzung sowohl auf anorganischem Wege (in Form einer hydrolytischen (Erst- oder Weiter-)Kondensation) als auch auf organischem Wege bewirkt wird.

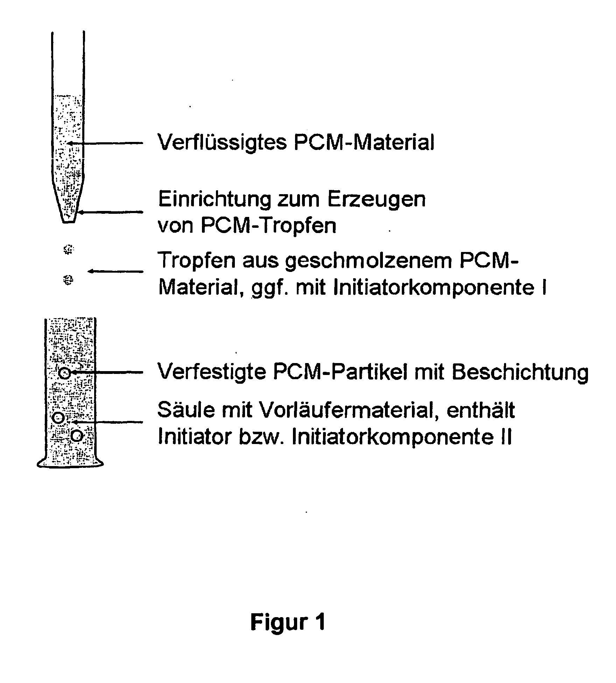

In einem beispielhaften Verfahren werden Tropfen von etwa 0,05 bis 4 mm, vorzugsweise von etwa 0,5 bis 1,5 mm, aus dem verflüssigten Latentwärmespeichermaterial, das gegebenenfalls in geeigneter Weise verdünnt und/oder mit einem Vernetzer oder Initiator versetzt ist, vorsichtig (vorzugsweise aus geringem Abstand, um eine möglichst runde Geometrie des verkapselten PCM zu erzielen) in das Verkapselungsmaterial eingebracht. Dies ist in Figur 1 schematisch dargestellt. Die Tropfen besitzen meist eine Temperatur oberhalb des Schmelzpunktes des jeweiligen PCM, die damit in der Regel oberhalb von 10 bis 120°C liegen sollte (da unterkühlte Schmelzen existieren, ist dies allerdings nicht immer zwingend); aus Gründen der einfachen Handhabung (und zum Beispiel bei der Verwendung von Natriumcarbonat-Salzhydrat günstig) sind Temperaturen von 30-45°C bevorzugt (verdünntes Natriumcarbonat-Dekahydrat mit einem Anteil von 27 Gew.-% Na₂CO₃ ist oberhalb von 35°C flüssig). Das Verkapselungsmaterial ist auf eine Temperatur unterhalb des Schmelzpunktes des PCM-Materials, z.B. ca. -5 bis -30°C heruntergekühlt. Nach kurzer Zeit werden die verkapselten Tropfen vom Beschichtungsmaterial getrennt. Will man eine relativ dünne Verkapselungsschicht erhalten, können die verkapselten Tropfen direkt nach der Isolierung mit einem geeigneten Solvens, z.B. dem Verdünnungsmittel des Vorläufermaterials, gewaschen werden, um anhaftendes, noch nicht vollständig vernetztes Vorläufermaterial abzutrennen. Wird eine relativ dicke Verkapselungsschicht angestrebt, werden die verkapselten Tropfen ohne weitere Behandlung getrocknet, z.B. an der Luft bei Raumtemperatur oder milden höheren Temperaturen.

Je nach Bedarf lassen sich auch größere oder vor allem kleinere (bis in den Bereich von 1-50 µm) Tropfen verkapseln.

Das voranstehend beschriebene Verfahren lässt sich selbstverständlich auch auf organische Latentwärmespeichermaterialien anwenden. In derartigen Fällen wird statt des Salzhydrats oder anderen anorganischen PCM ein Paraffin oder dgl. eingesetzt. Die Oberfläche auch dieser Materialien kann als Substrat für die Vernetzung des anorganischen Vorläufermaterials dienen.

Die für das erfindungsgemäße Verfahren vorgeschlagenen Verkapselungsmaterialien besitzen gute Schichtbildungseigenschaften und - bei geeigneter Wahl der zugrunde liegenden Silane wie oben erläutert-gute Passivierungseigenschaften (WVTR <3g/m², berechnet auf 100 µm Schichtdicke). Es lassen sich je nach Bedarf gute mechanische Eigenschaften sowie eine gute Beständigkeit der Beschichtung, insbesondere gegen Chemikalien und Lösungsmittel, erzielen. Die Oberflächeneigenschaften der Verkapselung lassen sich in weitem Umfang auf die geeigneten Parameter einstellen. Sofern auf den Zusatz von giftigen Metallalkoxiden verzichtet wird, was die Regel sein sollte, besitzen die Verkapselungen eine geringe Toxizität. Die Beschichtung kann durch den Einsatz geeigneter Silane der Formel (I) trüb oder transparent, gegebenenfalls auch gefärbt (durch den Zusatz von Metallionen oder von Farbstoffen) ausgebildet werden.

Mit den erfindungsgemäßen Verkapselungsmaterialien verkapselte PCM-Materialien können prinzipiell in verschiedene Matrices eingebracht werden. Die Kapseln, insbesondere in Form von Mikrokapseln (d.h. mit Durchmessern von unterhalb 1 mm bis 0,05 mm, ggf. sogar bis hinunter zu 1 µm) können als aktive Komponente in thermisch aktive Schlicker eingebracht werden. Weiterhin können die (Mikro-)Kapseln zur Energiespeicherung beispielsweise in Baumaterialien, Textilien und andere Materialien integriert werden. Die Vorteile der Verwendung von Mikrokapseln liegen dabei darin, dass ein zusätzlicher Verarbeitungs- und Versiegelungsprozess wie z.B. durch Einbringen in Container nicht erforderlich ist. In manchen Fällen kann es jedoch günstig sein, die einzelnen Kapseln noch weiter zu versiegeln, beispielsweise durch ein Beschichten ihrer Außenflächen mit offenen (z.B. musterförmigen) oder geschlossenen (durchgehenden) Metall- oder Metalloxidschichten oder dgl., die den Kapseln zusätzliche Eigenschaften verleihen können. Eine dieser Eigenschaften ist eine nochmals verbesserte Barrierewirkung, z.B. gegenüber Wasser, Wasserdampf oder anderen gasförmigen Substanzen, wie sie z.B. für Metall- und Metalloxidschichten bekannt sind. Techniken zum Aufbringen solcher Materialien, sowohl aus der Gasphase als auch durch chemische Abscheidungsprozesse, sind dem Fachmann in großer Zahl an die Hand gegeben.

### Beispiel 1

2217 g (100 mol-%; 12 mol) [2-(3,4-Epoxycyclohexyl)ethyl]-trimethoxysilan werden in 3190 g Diethylcarbonat (36 mol) mit 3,33 g (0,12 mol) NH₄F und 257 g Wasser hydrolytisch kondensiert. Das Lösungsmittel wird anschließend bei 40°C entfernt, das Produkt wird einer Druckfiltration unterworfen. Der anorganische Anteil dieses Materials ist auf 28 Gew.-%, bezogen auf die Gesamtmolmasse, eingestellt.

Das gebildete Harz wird unverdünnt oder gelöst in Toluol (mit einer Konzentration von mindestens 80 Gew.-% Harz) verwendet. Unmittelbar vor der Verwendung wird Triethylentetramin in einer Menge von 0,16 Mol pro Mol Silan zugesetzt, und die Lösung wird sofort in eine Säule gefüllt und auf unter 10°C, vorzugsweise auf -10 bis -20°C, gekühlt.

Natriumcarbonat-Dekahydrat mit 27 Gew.-% Natriumcarbonat wird auf 35°C erwärmt, wobei es schmilzt. Durch eine angewärmte Metallkanüle mit einem Durchmesser von 0,42 mm werden Tropfen aus einem Abstand von weniger als 1 cm in das gekühlte Harz getropft. Nach dem Erstarren der Schmelze werden die umhüllten Tropfen mechanisch aus der Beschichtungslösung entfernt. Einige Tropfen werden sofort im Anschluss mit Toluol gewaschen, um unreagiertes Harz zu entfernen, andere Tropfen werden unbehandelt belassen. Alle Kapseln werden an Luft bei Raumtemperatur getrocknet. Sie enthalten im Kern kristallines Natriumcarbonat-Dekahydrat, das von der polymerisierten Polysiloxanschicht umgeben ist. Diese besitzt eine Dicke von ca. 100-200µm in den ungewaschenen Kapseln. Die Sperrwirkung der Schicht ist gut, aber nicht vollständig.

### Beispiel 2

Beispiel 1 wird wiederholt, wobei jedoch als Verkapselungsmaterial ein acrylathaltiges Silanharz eingesetzt wird, das einen anorganischen Anteil, bezogen auf die Gesamtmolmasse, von ungefähr 10 Gew.-% aufweist.

Zur Herstellung dieses Silanharzes wird zunächst aus 355,58 g (120 mol-%, 1,2 mol) Trimethylolpropantriacrylat und 180,34 g (100 mol-%, 1 mol) Mercaptopropylmethyldimethoxysilan in 1200 ml Ethylacetat unter Zugabe von 68,31 g einer 1,0 Gew.-%igen ethanolischen Kaliumhydroxidlösung das Michael-Addukt hergestellt. Danach wird das entstandene Acrylatsilan mit 28,80 g einer 0,5 molaren Salzsäurelösung hydrolytisch kondensiert. Das Lösungsmittel wird anschließend bei 40 °C entfernt, das Produkt wird einer Druckfiltration unterworfen. Das Verkapselungsmaterial wird mit Ferrocen als Initiator versetzt, das vorzugsweise in etwas Lösemittel gelöst ist, z.B. Toluol oder Brombenzol in einem Anteil von mind. 25 Gew.-%. Dem Natriumcarbonat-Dekahydrat wird Ammoniumperoxodisulfat als hydrophile Komponente des Initiatorsystems zugesetzt. Beim Eintropfen werden unter Zusammenwirkung beider Initiatorkomponenten die zur Polymerisation der Acrylatgruppen erforderlichen Radikale gebildet. An der Grenzfläche zwischen PCM-Tropfen und Beschichtungslösung findet die Reaktion zur Bildung der Beschichtung statt. Die beschichteten Partikel werden abgetrennt und an Luft bei Raumtemperatur gelagert.

### Beispiel 3

Beispiel 2 wird wiederholt, wobei dem Verkapselungsmaterial vor dem Eintropfen des Natriumcarbonat-Dekahydrats 4-5 Gew.-% Aerosil® 380 von Evonik zugesetzt werden. Nach vier Stunden bei 50 °C werden der Beschichtungslösung, die ein Volumen von ca. 4 ml aufweist, 10 ml Toluol zugesetzt. Die beschichteten Partikel werden durch Filtration getrennt, mit insgesamt ca. 30 ml Toluol gewaschen und getrocknet.

### Beispiel 4

Beispiel 1 wurde wiederholt, wobei jedoch anstelle von Natriumcarbonat-Dekahydrat eine Mischung aus 17 Gew.-% Na₂CO₃, 15 Gew.-% Na₂HPO₄ und 68 Gew.-% H₂O eingesetzt wurde.

## Patentansprüche

1. Verfahren zum Herstellen eines anorganischen Latentwärmespeichermaterials, das von einer Verkapselungsschicht umgeben vorliegt, wobei die Verkapselungsschicht aus einem anorganisch-organischen Polymermaterial besteht, welches ein Metall- und/oder Halbmetall-Sauerstoff-Netzwerk mit eingelagerten organischen Gruppen aufweist, **dadurch gekennzeichnet, dass** flüssiges bzw. verflüssigtes Latentwärmespeichermaterial in Form diskreter, jeweils zu verkapselnder Einheiten in ein flüssiges oder viskoses Vorläufermaterial des Verkapselungsmaterials eingebracht wird, derart, dass sich das Verkapselungsmaterial beim Kontakt mit dem Latentwärmespeichermaterial an dessen Außenflächen verfestigt, wobei das Vorläufermaterial enthält:
entweder
(i) mindestens ein Silan der Formel
RₐR'_{b}SiX_{4-a-b} (I)
worin die Substituenten R, R' und X jeweils gleich oder verschieden sein können und worin R einen über ein Kohlenstoffatom am Silicium gebundenen, organisch vernetzbaren Rest darstellt, R' einen über ein Kohlenstoffatom am Silicium gebundenen, organisch nicht vernetzbaren Rest darstellt, X eine unter Hydrolysebedingungen vom Silicium abspaltbare Gruppe oder OH ist, a 1 oder 2 ist, b 0 oder 1 ist und a+b 1 oder 2 ist, sowie optional
(a) mindestens ein weiteres Silan der Formel (II)
SiX₄ (II)
worin X gleich oder verschieden ist und die gleiche Bedeutung wie in Formel (I) besitzt,
und/oder
(b) mindestens ein weiteres Silan mit der Formel (III)
RₐR'₃₋ₐSiX (III)
worin R, R' und X die voranstehend für Formel (I) angegebene Bedeutung haben,
und/oder
(c) mindestens ein C₁-C₆-Alkoxid eines Metalls der **III.** Hauptgruppe, des Germaniums oder eines Metalls der II, III., IV., V., VI, VII. und VIII. Nebengruppe
und/oder
(ii) ein durch Hydrolyse gebildetes (Teil-)Kondensat des oder der genannten Silane mit der Formel (I) und ggf. der Formel (II) und/oder der Formel (III) und ggf. des oder der Alkoxide.

2. Verfahren nach Anspruch 1, worin das Vorläufermaterial zusätzlich ein vorzugsweise organisches Quervernetzungsmaterial enthält.

3. Verfahren nach einem der voranstehenden Ansprüche, worin beim Einbringen des flüssigen oder verflüssigten Latentwärmespeichermaterials in das Vorläufermaterial Energie in einer solchen Menge in das Vorläufermaterial eingetragen wird, dass dessen genannte Verfestigung erfolgt.

4. Verfahren nach Anspruch 3, **dadurch gekennzeichnet, dass** mindestens ein Teil der genannten Energie in Form von Umwandlungswärme des Latentwärmespeichermaterials eingebracht wird.

5. Verfahren nach Anspruch 3 oder 4, **dadurch gekennzeichnet, dass** mindestens ein Teil der genannten Energie mit Hilfe eines im Latentwärmespeichermaterial vorhandenen Katalysators oder Initiators bereitgestellt wird.

6. Verfahren nach Anspruch 5, **dadurch gekennzeichnet, dass** der im Latentwärmespeichermaterial vorhandene Katalysator oder Initiator ohne weitere Zusätze seine Wirkung entfalten kann.

7. Verfahren nach Anspruch 5, **dadurch gekennzeichnet, dass** der im Latentwärmespeichermaterial vorhandene Katalysator oder Initiator erst dann seine Wirkung entfaltet, wenn er mit einem weiteren Katalysator- oder Initiatorbestandteil zusammenwirkt, welches im Vorläufermaterial vorhandenen ist.

8. Verfahren nach einem der voranstehenden Ansprüche, **dadurch gekennzeichnet, dass** das flüssige oder viskose Vorläufermaterial des Verkapselungsmaterials ein Verdickungsmittel enthält.

9. Anorganisches Latentwärmespeichermaterial, das von einer Verkapselungsschicht umgeben vorliegt, wobei die Verkapselungsschicht aus einem anorganisch-organischen Polymermaterial besteht, das hergestellt ist aus oder unter Verwendung von
entweder
(i) mindestens einem Silan der Formel
RₐR'_{b}S1X_{4-a-b} (I)
worin die Substituenten R, R' und X jeweils gleich oder verschieden sein können und worin R einen über ein Kohlenstoffatom am Silicium gebundenen, organisch vernetzbaren Rest darstellt, R' einen über ein Kohlenstoffatom am Silicium gebundenen, organisch nicht vernetzbaren Rest darstellt, X eine unter Hydrolysebedingungen vom Silicium abspaltbare Gruppe oder OH ist, a 1 oder 2 ist, b 0 oder 1 ist und a+b 1 oder 2 sind, sowie optional
(a) mindestens einem weiteren Silan der Formel (II)
SiX₄ (II)
worin X gleich oder verschieden ist und die gleiche Bedeutung wie in Formel (I) besitzt,
und/oder
(b) mindestens einem weiteren Silan mit der Formel (III)
RₐR'₃₋ₐSiX (III)
worin R, R' und X die voranstehend für Formel (I) angegebene Bedeutung haben,
und/oder
(c) mindestens einem C₁-C₆-Alkoxid eines Metalls der III. Hauptgruppe, des Germaniums oder eines Metalls der 11., III., IV., V., VI, VII. und VIII. Nebengruppe
und/oder
(ii) einem durch Hydrolyse gebildeten (Teil-)Kondensat des oder der genannten Silane mit der formel (I) und ggf. der Formel (II) und/oder der Formel (III) und ggf. des oder der Alkoxide.

10. Latentwärmespeichermaterial nach Anspruch 9, worin das Wärmespeichermaterial ausgewählt ist unter ggf. verdünnten Salzhydraten.

11. Latentwärmespeichermaterial nach einem der Ansprüche 9 oder 10, worin die Kapseln einen Durchmesser von 0,05 bis 5mm, vorzugsweise zwischen 0,5 und 4 mm aufweisen.

12. Latentwärmespeichermaterial nach Anspruch 11, worin die Kapseln einen Durchmesser von 0,3 bis 3mm aufweisen und das Verkapselungsmaterial eine Dicke von 0,05 bis 0,4mm besitzt.

13. Latentwärmespeichermaterial nach einem der Ansprüche 9 bis 12, **dadurch gekennzeichnet, dass** die Verkapselungsschicht teilweise oder vollständig von einer oder mehreren Außenschichten umgeben ist.

14. Latentwärmespeichermaterial nach Anspruch 13, **dadurch gekennzeichnet, dass** die Außenschicht oder mindestens eine der Außenschichten eine Schicht ist, die gegenüber Wasser, Wasserdampf oder einem Gas eine Barrierewirkung besitzt.

## Claims

1. Process for producing an inorganic latent heat accumulator material which is present surrounded by an encapsulation layer, wherein the encapsulation layer consists of an inorganic-organic polymer material which comprises a metal and/or half metal oxygen network including organic groups inserted therein, **characterized in that** liquid or liquefied latent heat accumulator material, respectively, is introduced into a liquid or viscous precursor material of the encapsulation material in the form of discrete units in each case to be encapsulated, such that the encapsulation material is solidified upon contact with the latent heat accumulator material at the exterior surfaces of the latter, wherein the precursor material contains:
either
(i) at least one silane of the formula
RₐR'_{b}SiX_{4-a-b} (I)
wherein the substituents R, R' and X may be identical or different in each case and wherein R is an organically crosslinkable radical bound to the silicon via a carbon atom, R' is an organically not crosslinkable radical bound to the silicon via a carbon atom, X is a group which can be cleaved from the silicon under hydrolytic conditions or is OH, a is 1 or 2, b is 0 or 1, and a+b is 1 or 2,
as well as optionally
(a) at least a further silane of formula (II)
SiX₄ (II)
wherein X is identical or different and has the identical meaning as in formula (I),
and/or
(b) at least a further silane of formula (III)
RₐR'₃₋ₐSiX (III)
wherein R, R' and X have the meaning specified above for formula (I), and/or
(c) at least one C₁-C₆-alkoxide of a metal of the III^{rd} main group, of germanium or of a metal of the II^{nd}, III^{rd}, IV^{th}, V^{th}, VI^{th}, VII^{th}, and VIII^{th} subgroup
and/or
(ii) a (partial) condensate of said silane or silanes of formula (I) and optionally of formula (II) and/or formula (III) and optionally of the alkoxide(s), produced by hydrolysis.

2. Process according to claim 1 wherein the precursor material additionally contains a preferably organic crosslinking material.

3. Process according to one of the preceding claims wherein, when the liquid or liquefied latent heat accumulator material is introduced into the precursor material, energy is fed into the precursor material in such an amount that said solidification thereof takes place.

4. Process according to claim 3, **characterized in that** at least a part of said energy is introduced in the form of heat of transformation of the latent heat accumulator material.

5. Process according to claim 3 or 4, **characterized in that** at least a part of said energy is provided with the aid of a catalyst or initiator present in the latent heat accumulator material.

6. Process according to claim 5, **characterized in that** the catalyst or initiator present in the latent heat accumulator material can be effective without further additions.

7. Process according to claim 5, **characterized in that** the catalyst or initiator present in the latent heat accumulator material is only effective in co-operation with a further catalyst or initiator component which is present in the precursor material.

8. Process according to one of the preceding claims, **characterized in that** the liquid or viscous precursor material of the encapsulation material contains a thickener.

9. Inorganic latent heat accumulator material which is present surrounded by an encapsulation layer, wherein the encapsulation layer consists of an inorganic-organic polymer material which is produced from or using either
(i) at least one silane of the formula
RₐR'_{b}SiX_{4-a-b} (I)
wherein the substituents R, R' and X may be identical or different in each case and wherein R is an organically crosslinkable radical bound to the silicon via a carbon atom, R' is an organically not crosslinkable radical bound to the silicon via a carbon atom, X is a group which can be cleaved from the silicon under hydrolytic conditions or is OH, a is 1 or 2, b is 0 or 1, and a+b is 1 or 2,
as well as optionally
(a) at least a further silane of formula (II)
SiX₄ (II)
wherein X is identical or different and has the identical meaning as in formula (I),
and/or
(b) at least a further silane of formula (III)
RₐR'₃₋ₐSiX (III)
wherein R, R' and X have the meaning specified above for formula (I), and/or
(c) at least one C₁-C₆-alkoxide of a metal of the III^{rd} main group, of germanium or of a metal of the II^{nd}, III^{rd}, IV^{th}, V^{th}, VI^{th}, VII^{th}, and VIII^{th} subgroup
and/or
(ii) a (partial) condensate of said silane or silanes of formula (I) and optionally of formula (II) and/or formula (III) and optionally of the alkoxide(s), produced by hydrolysis.

10. Latent heat accumulator material according to claim 9 wherein the heat accumulator material is selected from optionally diluted salt hydrates.

11. Latent heat accumulator material according to any of claims 9 or 10 wherein the capsules have a diameter of from 0.05 to 5 mm, preferably between 0.5 and 4 mm.

12. Latent heat accumulator material according to claim 11 wherein the capsules have a diameter of from 0.3 to 3 mm and the encapsulation material has a thickness of from 0.05 to 0.4 mm.

13. Latent heat accumulator material according to any of claims 9 to 12, **characterized in that** the encapsulation layer is partially or completely surrounded by one or several outer layers.

14. Latent heat accumulator material according to claim 13, **characterized in that** the outer layer or at least one of the outer layers is a layer which has a barrier effect with respect to water, water vapour or a gas.

## Revendications

1. Procédé de préparation d'un matériau inorganique accumulateur de chaleur latente qui se présente enveloppé dans une couche d'encapsulation, la couche d'encapsulation consistant en un matériau polymère inorganique-organique qui comporte un réseau métal/oxygène et/ou semi-métal/oxygène avec des groupes organiques incorporés, **caractérisé en ce qu'**un matériau accumulateur de chaleur latente liquide, respectivement liquéfié, est introduit sous la forme d'unités discrètes, chacune devant être encapsulée, dans un matériau liquide ou visqueux précurseur du matériau d'encapsulation, de telle sorte que le matériau d'encapsulation se solidifie à sa surface extérieure au contact du matériau accumulateur de chaleur latente, le matériau précurseur contenant :
soit
(i) au moins un silane de la formule
RₐR'_{b}SiX_{4-a-b} (I)
dans laquelle R, R' et X peuvent être respectivement identiques ou différents et dans laquelle R représente un radical organiquement réticulable lié au silicium par un atome de carbone, R' un radical organiquement non réticulable lié au silicium par un atome de carbone, X est un groupe susceptible d'être éliminé du silicium sous des conditions d'hydrolyse ou un OH, a est égal à 1 ou 2, b à 0 ou 1 et a+b à 1 ou 2,
ainsi que, en option
(a) au moins un autre silane de la formule (II)
SiX₄ (II)
dans laquelle les X sont identiques ou différents et possèdent la même signification que dans la formule (I),
et/ou
(b) au moins un autre silane de la formule (III)
RₐR'₃₋ₐSiX (III)
dans laquelle R, R' et X ont la signification précédemment définie pour la formule (I),
et/ou
(c) au moins un alcoxyde en C₁ à C₆ d'un métal du III^{e} groupe principal, du germanium ou d'un métal des II^{e}, III^{e}, IV^{e}, V^{e}, VI^{e}, VII^{e}, et VIII^{e} groupes secondaires soit/et
(ii) un condensat (partiel) formé par hydrolyse du ou des silanes susmentionnés de la formule (I) et le cas échéant de la formule (II) et/ou de la formule (III) et le cas échéant du ou des alcoxydes.

2. Procédé selon la revendication 1, **caractérisé en ce que** le matériau précurseur contient en plus un matériau de réticulation de préférence organique.

3. Procédé selon l'une quelconque des revendications précédentes, dans lequel, lors de l'introduction du matériau liquide accumulateur de chaleur latente dans le matériau précurseur, de l'énergie est introduite dans le matériau précurseur en une quantité telle que sa solidification susmentionnée s'effectue.

4. Procédé selon la revendication 3, **caractérisé en ce qu'**au moins une partie de l'énergie susmentionnée est introduite sous la forme de chaleur de transformation du matériau accumulateur de chaleur latente.

5. Procédé selon la revendication 3 ou 4, **caractérisé en ce qu'**au moins une partie de l'énergie susmentionnée est fournie à l'aide d'un catalyseur ou d'un initiateur présent dans le matériau accumulateur de chaleur latente.

6. Procédé selon la revendication 5, **caractérisé en ce que** le catalyseur ou l'initiateur présent dans le matériau accumulateur de chaleur latente peut développer son action sans autres additifs.

7. Procédé selon la revendication 5, **caractérisé en ce que** le catalyseur ou l'initiateur présent dans le matériau accumulateur de chaleur latente ne développe son action que quand il agit en coopération avec un autre composant catalyseur ou initiateur, lequel est présent dans le matériau précurseur.

8. Procédé selon l'une quelconque des revendications précédentes, **caractérisé en ce que** le matériau liquide ou visqueux, précurseur du matériau d'encapsulation, contient un agent épaississant.

9. Matériau inorganique accumulateur de chaleur latente qui se présente enveloppé d'une couche d'encapsulation, la couche d'encapsulation consistant en un matériau polymère inorganique-organique, qui est préparé en ou en utilisant
soit
(i) au moins un silane de la formule
RₐR'_{b}SiX_{4-a-b} (I)
dans laquelle R, R' et X peuvent être respectivement identiques ou différents et dans laquelle R représente un radical organiquement réticulable lié au silicium par un atome de carbone, R' un radical organiquement non réticulable lié au silicium par un atome de carbone, X est un groupe susceptible d'être éliminé du silicium sous des conditions d'hydrolyse ou un OH, a est égal à 1 ou 2, b à 0 ou 1 et a+b à 1 ou 2, ainsi que, en option
(a) au moins un autre silane de la formule (II)
SiX₄ (II)
dans laquelle les X sont identiques ou différents et possèdent la même signification que dans la formule (I),
et/ou
(b) au moins un autre silane de la formule (III)
RₐR'₃₋ₐSiX (III)
dans laquelle R, R' et X ont la signification précédemment définie pour la formule (I),
et/ou
(c) au moins un alcoxyde en C₁ à C₆ d'un métal du III^{e} groupe principal, du germanium ou d'un métal des II^{e}, III^{e}, IV^{e}, V^{e}, VI^{e}, VII^{e}, et VIII^{e} groupes secondaires
soit/et
(ii) un condensat (partiel) formé par hydrolyse du ou des silanes susmentionnés de la formule (I) et le cas échéant de la formule (II) et/ou de la formule (III) et le cas échéant du ou des alcoxydes.

10. Matériau accumulateur de chaleur latente selon la revendication 9, dans lequel le matériau accumulateur de chaleur est choisi parmi des hydrates de sel, dilués le cas échéant.

11. Matériau accumulateur de chaleur latente selon l'une quelconque des revendications 9 ou 10, dans lequel les capsules ont un diamètre de 0,05 à 5 mm, de préférence de 0,5 à 4 mm.

12. Matériau accumulateur de chaleur latente selon la revendication 11, dans lequel les capsules présentent un diamètre de 0,3 à 3 mm et le matériau d'encapsulation possède une épaisseur de 0,05 à 0,4 mm

13. Matériau accumulateur de chaleur latente selon l'une quelconque des revendications 9 à 12, **caractérisé en ce que** la couche d'encapsulation est entourée partiellement ou totalement d'une ou de plusieurs couches extérieures.

14. Matériau accumulateur de chaleur latente selon la revendication 13, **caractérisé en ce que** la couche extérieure ou au moins une des couches extérieures est une couche qui possède vis-à-vis de l'eau, de la vapeur d'eau ou d'un gaz un effet de barrière.
